# EUROPEAN PATENT SPECIFICATION

(11) **EP 0 575 171 B1**
(45) Date of publication and mention of the grant of the patent: **13.10.1999**
(21) Application number: 93304730.0
(22) Date of filing: 17.06.1993
(51) Int. Cl.: G06F 12/02, G06F 9/46, G06F 1/32, G06F 11/14

(54) **Enhanced system management method and apparatus**
Verbesserte Systemverwaltungsverfahren und -vorrichtung
Méthode et dispositif améliorés pour la gestion de systèmes

(30) Priority: 17.06.1992 US 900052; 14.05.1993 US 62014
(43) Date of publication of application: 22.12.1993
(73) Proprietor: NATIONAL SEMICONDUCTOR CORPORATION, Richardson, Texas (US)
(72) Inventor: Maher III, Robert D., Carollton, Texas 75007 (US); Garibay, Raul, A., Jr., Richardson , Texas 75080 (US); Herubin, Margaret R., Coppell, Texas 75019 (US); Hervin, Mark Warden, Dallas, Texas 75252 (US)
(74) Representative: Harris, Ian Richard

(56) References cited:
- WO-A-91/17505
- GB-A- 2 259 166
- US-A- 4 250 546
- US-A- 5 274 791
- US-A- 5 274 834
- '386 DX PROGRAMMER'S REFERENCE MANUAL' 1990 , INTEL CORPORATION , SANTA CLARA, US * figures 9-1; tables 9-2 * * page 9-1, line 1 - page 9-3, line 31 * * page 9-5, line 1 - page 9-6, line 6 * * page 9-8, line 1 - page 9-11, line 8 * * page 14-3, line 9 - line 37 *
- A.TULLY '6502 REFERENCE GUIDE' 1985 , MELBOURNE HOUSE , RICHMOND, GB * page 4, bit 4 of processor status register *

## Description

This invention relates in general to electronic circuits, and more particularly to a microprocessor with enhanced system management mode (SMM) capabilities, including added functionality for recognizing NMI during SMM, buffering in SMM space I/O port information in response to an I/O trap, initiating SMM with a software instruction, and locking SMM configuration control.

In relation to general interrupts that temporarily suspend current instruction execution, the "386 DX Microprocessor Programmer's Reference Manual" 1990, Chapter 9, discloses a microprocessor which includes 8-byte descriptors for interrupt procedures stored in an interrupt descriptor table residing in a selected address space of physical memory defined by a base address and a limit value. Hardware initiated interrupts access the selected address space to execute the corresponding interrupt procedure.

WO-A-91 17505 discloses a source level debugging system for run-time debugging of source code. In response to a BREAK signal to a CPU, an in-circuit emulation program stored in a fixed area of memory space is executed.

US-A-5,274,791 discloses a microprocessor employing an "OEM" mode of operation that can be used to implement special tasks such as power management. The OEM mode employs a separate non-programmable memory space normally accessed by the microprocessor. On entry to the OEM space, processor status information is saved in OEM RAM.

During execution of an application program on a computer system, it is often desirable to perform certain functions transparently to the application program. For example, in laptop systems, there may be power management functions which must be performed during the execution of an application program without affecting the operation of the application program in any way.

In this regard, the system management interrupt (SMI) is provided on certain microprocessors (such as the Am386SXLV by Advanced Micro Devices of Austin, Texas, and the Intel 386SL microprocessor superset by Intel Corporation of Santa Clara, California). Disclosure of a similar microprocessor employing such an SMI is also contained in US-A-5,274,834. The SMI is non-maskable and typically has a higher priority than the NMI (non-maskable interrupt). Upon receiving an SMI, the Intel microprocessor superset maps a system management RAM (SM-RAM) address space into the memory space from 030000H-03FFFFH. All information relating to the current state of the microprocessor is saved to the SM-RAM area starting at address 3FFFFH and proceeding down in a stack-like fashion. The Intel microprocessor superset then begins executing in real mode at address 030000H. Upon execution of a resume (RSM) instruction, the previous state of the processor is restored and program execution continues.

The SM-RAM can be either dedicated RAM or part of the main memory. However, in the Intel microprocessor superset, the SM-RAM must occupy the address space between 30000H and 3FFFFH. This address space is accessible only when an SMI interrupt occurs, or if a bit (bit 3 of the OMDCR register) is set to a predetermined value. The purpose of the dedicated address space is to protect the SMI program from inadvertent overwriting by the application program, BIOS, operating system or other concurrently executing program. After the SMI handler has finished executing, the Intel SL microprocessor superset restores the state of the CPU from system management memory, makes the normal memory accessible, and makes the SM-RAM inaccessible.

The prior art SMI systems have several inherent faults. First, no flexibility is provided for managing the SMI address space, either the starting location or the size of the SM-RAM. Consequently, the allocated address space for SMI may be too large, thereby wasting RAM locations, or too small, thereby limiting the usefulness of the SMI handler. Further, the prior art solutions store the entire state of the CPU automatically upon receiving an SMI interrupt. Consequently, each SMI entails a large time overhead for saving the information, whether or not the SMI routine requires saving the entire state of the microprocessor.

Prior art SMI systems have a number of other disadvantages. First of all, while an SMI routine is active, NMIs are not recognized -- the microprocessor usually will store at least one NMI event that will be serviced after RSM is used to exit the SMI routine. However, in certain situations, it may be desirable to recognize an NMI that represents catastrophic failure, such as a parity error. Second, in using SMI to implement power-down/up of peripherals, an I/O instruction to a powered-down peripheral will result in a trap to an SMI handler that will power-up the peripheral. In some situations, such as string instructions, retrying a trapped I/O instruction can be problematic for the programmer. Third, SMI configuration is controlled by control registers values that, for example, enable SMI, and enable reads/writes to/from memory and/or SMI space. Because SMI operation is not subject to normal operating system protection mechanisms, unauthorized access to an SMI configuration control register, such as by a hacker or a virus, represents a serious protection hole. And fourth, in prior art systems, SMI can only be invoked by a hardware SMI interrupt.

Therefore, a need has arisen in the industry for a system of implementing a system management mode (SMM) of operation which is fast, flexible, and secure.

In accordance with the present invention a microprocessor, intended in use to be coupled to a memory, includes circuitry for programmably defining a desired range of addresses within the address space of the memory for storing system management routines; circuitry responsive to a system management interrupt to access said defined address range for selectively invoking said routines in performing a system management mode operation; and circuitry for programmably storing processor status information in said defined range of addresses responsive to said system management interrupt. Preferably, the desired range of addresses is programmable as to base address and block size.

By programmably defining the range of addresses for the system management memory (SMM), the SMM may be customized to the SMI routines, such that excessive memory space is not wasted by the SMM, and the SMM may be provided in an area of the microprocessor's address space which will not affect other system or application programs.

In addition, by programmably storing processor status information upon receiving an SMI request, the programmer can control what processor status information is saved. In a preferred embodiment, certain processor status information which will always be affected upon initiation of an SMI service routine is automatically stored. This aspect of the invention significantly reduces the minimum time overhead involved with regard to an SMI service routine.

SMM mode operation may selectably include one or more of the following features: (a) servicing NMIs during SMM operation; (b) locking access to SMM control information; (c) saving I/O trap information, and/or (d) initiating SMM operation with a software instruction

The microprocessor prefereably includes circuitry that in response to an SMI signal, invokes an SMM routine which performs a selected SMM operation and then returns the microprocessor to normal mode operation.

The microprocessor may include circuitry for selectively enabling recognition of NMIs during SMM operations, such that, with NMI enabled, an SMM routine will execute the corresponding SMI handler routine, but with NMI not enabled, an SMM routine will not respond to the NMI interrupt, whereby the NMI interrupt can only be serviced after a return to normal mode operation.

The microprocessor may also include circuitry that, when an SMM lock state is enabled, prevents any activity other than an SMM routine from modifying SMM configuration information.

Also, the microprocessor may include circuitry that, during normal mode operations, stores I/O information about a current I/O operation in a temporary register, and circuitry that in response to an SMI signal, invokes an SMM routine which performs a selected SMM operation including storing selected microprocessor status information within the SMM address space, including the I/O information from the temporary register. Preferably, the I/O information comprises the associated operand, operand size, and port address for the I/O operation.

Further, the microprocessor may include circuitry that, in response to either (i) an SMI signal external to the microprocessor, or (ii) an SMI signal provided by software being executed by the microprocessor during normal mode operations, invokes an SMM routine which performs a selected SMM operation and then returns the microprocessor to normal mode operation. Preferably, the microprocessor status information saved during an SMM routine includes an indication of whether the SMM operation was initiated by software.

Technical advantages associated with these various embodiments of the invention include the following. The NMI servicing feature provides flexibility in servicing, during SMM operations, NMIs that may represent catastrophic failures. The SMM locking feature prevents unauthorized access to SMM space or SMM routines, such as by hackers or viruses. The I/O buffering feature facilitates transparent retries of I/O operations after SMM operations, such as for power-up of peripherals. And, the software SMM instruction provides added flexibility in the use of SMM operations

An embodiment of the invention is described hereinafter, by way of nonlimiting example only, with reference to the accompanying drawings, in which:
FIGURE 1 illustrates a block diagram of a computer system;
FIGURE 2 illustrates a block diagram of a preferred embodiment of a microprocessor used in the computer system of FIGURE 1;
FIGURE 3 illustrates a flow chart describing overall operation of an SMM service routine;
FIGURE 3a shows a timing diagram of an SMM handshake protocol;
FIGURE 3b shows a timing diagram for a SMM I/O trap mechanism;
FIGURE 3c illustrates a diagram of usage of the SMM memory space for storing microprocessor values in response to an SMI request; and
FIGURE 4 illustrates a block diagram of the register file, and circuitry for communicating therewith, for storing SMI configuration data.

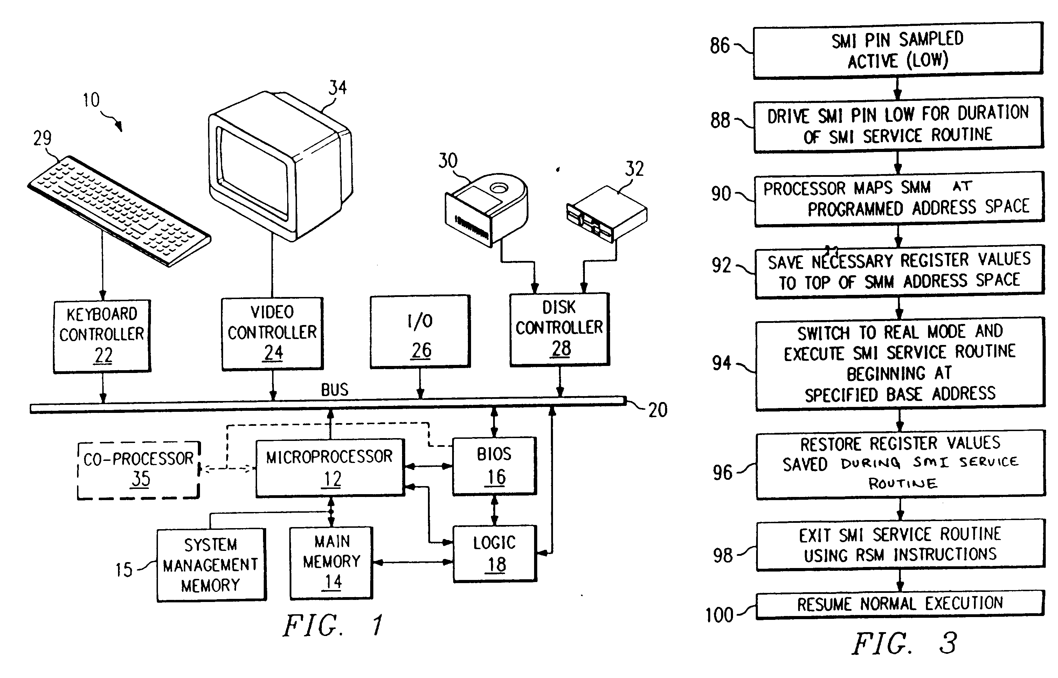

Referring to FIGUREs 1-4 of the drawings, like numerals are being used for like and corresponding parts of the various drawings. FIGURE 1 illustrates a block diagram of a computer system. The computer system 10 comprises a microprocessor 12 coupled to a main memory 14, system management memory (SMM) 15 (analogous to the SM-RAM described above), BIOS ROM 16 and logic 18 (commonly referred to as the "chipset") Microprocessor 12 is coupled to bus 20. Bus 20 is used to communicate with a number of devices, shown in FIGURE 1 as keyboard controller 22, video controller 24, I/O circuitry 26 and disk controller 28. Keyboard controller 22 is coupled to keyboard 29. Disk controller 28 is coupled to hard disk 30 and floppy disk 32. Video controller 24 is coupled to display 34. An optional coprocessor 35 is coupled to microprocessor 12 and BIOS 16.

The computer system 10 shown in FIGURE 1 is a general-purpose architecture common to personal computers such as the IBM Personal Computer and compatibles. The BIOS 16 (basic input/output system) is typically a read-only memory which contains a set of programs for performing the basic control and supervision operations for the computer system 10. The BIOS 16 acts as an interface between the computer circuitry and the application software being executed by the CPU 12. Importantly, for power consumption purposes, the BIOS 16 and logic 18 monitor the circuitry to determine whether power consumption reduction procedures may be invoked. For example, the BIOS 16 and/or logic 18 may monitor the display 34 to determine whether its output has changed over a predetermined time period. If not, the BIOS 16 may invoke procedures to disable power to the display 34 (assuming computer system 10 is a portable computer) to conserve energy. Further, BIOS 16 monitors microprocessor 12 to determine whether the microprocessor can be idled without affecting operation of the computer system 10. For example, the microprocessor 12 may be executing a routine to wait for a character from the keyboard. In this case, the operation of the microprocessor 12 can be suspended until a key is pressed.

SMM 15 may be part of the main memory or a separate memory as shown in FIGURE 1. If SMM 15 is a separate memory, the corresponding address space of the main memory may be used for non-SMI purposes.

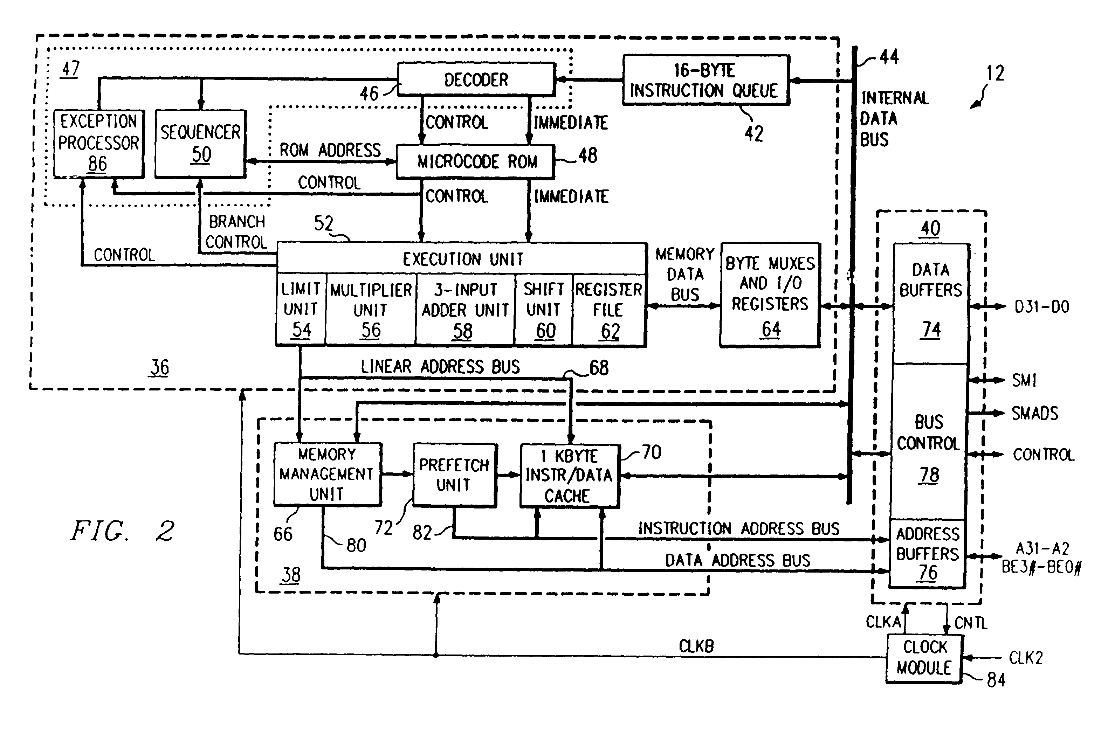

FIGURE 2 illustrates a detailed block diagram of the various subcircuits of a preferred embodiment of the microprocessor 12. For purposes of illustration, the microprocessor 12 will be described in connection with a microprocessor which is pin-compatible and instruction-compatible with the 80x86 family of processors by Intel Corporation, although the invention could be used in other processors as well.

The microprocessor 12 comprises three main functional groups: the core circuitry 36, the memory circuitry 38 and the bus controller 40. The core circuitry 36 includes an instruction queue 42 coupled to an internal data bus 44. The output of the instruction queue 42 is coupled to a decoder 46 of the decode/sequence circuitry 47. The decode/sequence circuitry 47 also includes a sequencer 50 and an exception processor 86. The decoder 46 is coupled to a microcode ROM 48, exception processor 86 and sequencer 50. The sequencer 50 is also coupled to the microcode ROM 48 and to an execution unit 52. The execution unit includes a limit unit 54, a multiplier unit 56, an adder unit 58, a shift unit 60, and a register file 62. The execution unit 52 is coupled to the microcode ROM 48 and to multiplexer and I/O register circuitry 64. The memory circuitry 38 comprises a memory management unit 66 coupled to a linear address bus 68 which is also connected to the execution unit 52 and an instruction/data cache memory 70. Memory management unit 66 is further coupled to the internal data bus 44. A prefetch unit 72 is coupled between the memory management unit 66 and the cache 70. Bus controller 40 includes data buffers 74, address buffers 76 and control circuitry 78. The data buffers 74 are coupled to the data I/O pins D31-D0, the address buffers 76 are coupled to the address pins A31-A2 and BE3#-BE0# (for the 386DX bus architecture shown; a 386SX bus architecture would include address pins A24-A1 and BE[1:01]). A data address bus 80 couples the memory management unit 66, the cache 70 and the address buffer 76. An instruction address bus 82 couples the prefetch unit 72, cache 70 and address buffer 76. The data buffers 74 are coupled to the internal data bus 44. SMI (System Management Interrupt) and SMADS (System Management Address) pins are coupled to the bus control circuitry 78.

In the preferred embodiment, clock module 84 receives an external clock signal (CLK2) and generates CLKA (connected to the bus controller 40) and CLKB (coupled to the memory circuitry 38 and the core circuitry 36). CLKA and CLKB are both clock signals of one-half the frequency of CLK2. Clock module 84 receives control signals from bus controller 40. This structure provides for suspension of selected processor operations and is discussed in greater detail in connection in "Microprocessor with Hardware Controlled Power Management", EP-A-0 562 885.

In operation, instructions are received by the microprocessor 12 from external memory under control of the memory management unit 66. For enhanced performance, an instruction/data cache 70 caches instruction and data received through the bus controller 40. Instructions are stored in the instruction queue and are subsequently translated by the decode circuitry 46 into microcode. The sequencer points to the next address in the microcode ROM 48 under control of the decoder 46 and the execution unit 52. The execution unit 52 processes information under control of the microcode ROM 48.

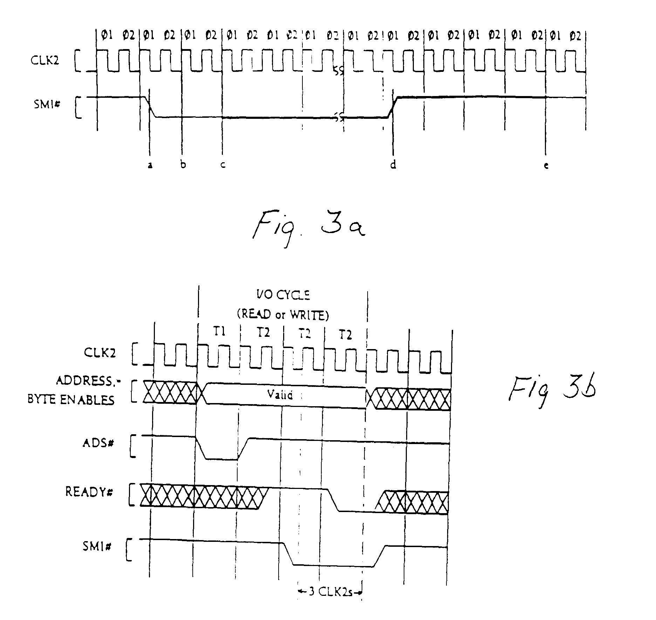

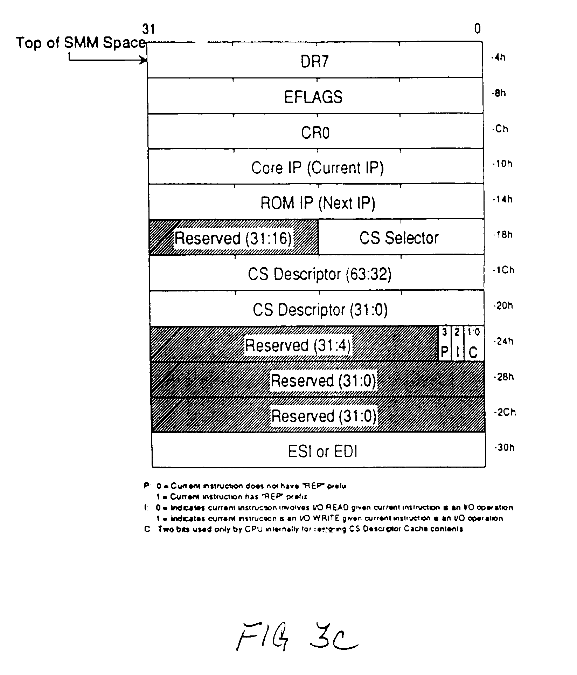

Operation of the microprocessor 12 of FIGURE 2 with regard to a SMI request is described in connection with the flow chart of FIGURE 3. In block 86, the SMI pin is sampled active, indicating a request for the SMI service routine. In the preferred embodiment, the signal on the SMI pin must be active for at least four CLK2 periods to be recognized by the microprocessor 12 as a valid request. The microprocessor 12 recognizes an SMI interrupt input only when: (1) the SMI input pin is sampled active, (2) the SMM access bit (described below) is disabled, (3) the processor is not currently executing an SMI service routine, (4) SM4 bit (see Table 1) is set defining Address Region 4 as the SMM memory space, and (5) the size of Address Region 4 is defined (not disabled). During execution of an SMI service routine, the SMI pin is driven low by the microprocessor 12 until execution of the RSM instruction. Therefore, an external source cannot generate a second SMI until the current SMI service routine is complete.

Timing of the SMI handshake is shown in FIGURE 3a. Five significant events take place during the handshake. At "a", SMI# input pin goes active (low). At "b", the microprocessor samples SMI# active on the rising edge of CLK2 phase 1. At "c", two CLK2s after sampling the SMI# active, the microprocessor switches the SMI# pin to an output and drives it low. At "d", the microprocessor drives the SMI# pin high after RSM instruction has been executed indicating completion of the SMI service routine. At "e", the microprocessor stops driving SMI# pin low and switches the SMI# pin to an input in preparation for the next SMI interrupt. The system is responsible for maintaining SMI# pin at an inactive level after the pin has been changed to an input.

The microprocessor provides an SMI I/O trap mechanism which can be used to facilitate power management of I/O peripherals described in conjunction with the timing diagram of FIGURE 3b. When an I/O bus cycle is issued, the I/O address is driven onto the address bus. This address can be decoded by external logic. If a trap to the SMI handler is required, the SMI# input should be activated at least three CLK2 edges prior to returning the READY# input for the I/O cycle. The microprocessor immediately traps to the SMI interrupt handler following execution if the I/O instruction, and no other instructions are executed between completion of the I/O instruction and entering the SMI service routine. The I/O trap mechanism is not active during coprocessor accesses. The SMADS# functional timing, output delay times and float delay times are identical to the main memory address strobe (ADS#) timing. The SMI# input setup and hold times are identical to the timing for the NMI and INTR inputs. The SMI# output float delay times are identical to timing for the address bus outputs.

Referring again to FIGURE 3, upon receiving a valid SMI request, the microprocessor 12 drives the SMI pin low in block 88. During the service routine, the SMADS output from the microprocessor 12 is activated (held low) to indicate that the current bus cycle is an SMM access and that the SMM address is present on the CPU address bus (A31-A2 and BE[3:0] for the 386DX bus architecture and A23-A1 and BE[1:0] for the 386SX bus architecture).

Upon detection of the falling edge of the SMI input, the microprocessor 12 maps the SMM to the programmed address space (described below in connection with Table 1) in block 90 and automatically saves the current and previous instruction pointers (EIP), CR0 register, EFLAGS register, DR7, code segment (CS) and the CS descriptor cache value current instruction REP prefix indicator (P), read/write string instruction indicator (I) and ESI (source memory) or EDI (destination memory) register in block 92. The above-referenced values are stored to the top of the programmed SMM address space as shown in FIGURE 3c. These register values are saved automatically upon initiation of a SMI service routine because the microprocessor 12 always modifies these values upon entry to the SMI service routine. CR0, EFLAGS and DR7 are set to their reset values and the CS register is loaded with the base address and limits defined by the SMM configuration registers, described below.

Although a portion of the processor state information is stored to the top of SMM address range in block 92, the full internal state of the microprocessor 12 can be saved to the SMM via execution of the normal MOV instruction and the SVDC, SVLDT and SVTS instructions, which are enhancements to the 386 and 486 instruction sets. The SVDC, SVLDT and SVTS instructions are used to store the segment registers, local descriptor table and task-state, respectively, and the associated descriptor cache contents in an 80-bit memory location which are not accessible to the programmer using the MOV command. The formats for the save instruction are as follows:
SVDC mem80, Reg
SVLDT mem80
SVTS mem80
where "mem80" refers to the 80-bit memory location in which the register value is to be saved. "Reg" specifies which register is to be saved (DS, ES, FS, GS, SS or CS).

The SVDC, SVLDT and SVTS instructions allow the programmer greater control over the time delay between initiation of the SMI interrupt and the beginning of execution of the SMI service routine. Since, in the preferred embodiment, the microprocessor 12 is a static device, it will be unnecessary, in most cases, to save the full state of the microprocessor, since the state of the microprocessor is retained internally even with the clock input stopped. However, in the case where the system designer intends to shut off CPU power entirely, a full CPU state is required to resume operation where execution left off.

In block 94, the microprocessor begins the SMI service routine in real mode. The programmer must save the value of any registers that will be used by the service routine. For data access immediately after SMI entry, the programmer must use CS as a segment override. I/O port access is possible at the start of the routine, but the programmer must take care to save registers modified by the I/O instructions. To use a segment register, the register and the register's descriptor cache contents can be saved using the SVDC instruction. Once the execution of the service routine begins, memory and I/O accesses may take place. Data access to memory locations outside of the defined SMM memory space are issued with ADS# active rather than SMADS#. SMM memory accesses are automatically not cached. The processor may change from real mode to protected mode as required, and real or protected mode device drivers can be called.

After execution of the SMI service routine in block 94, the registers values saved using the MOV, SVDC, SVLDC, SVLDT and SVTS instructions (in block 92) are restored using MOV, RSDC, RSLDT, and RSTS instructions, respectively. The RSDC, RSLDT and RSTS instructions are provided to allow reloading of the segment registers, LDT (local descriptor table) and TS (task state), respectively, and associated descriptor cache values that were stored using the SVDC, SVLDT and SVTS instructions. The formats for the restore instructions are as follows:
RSDC Reg, mem80
RSLDT, mem80
RSTS, mem80
where Reg and mem80 are the selected register and 80-bit memory locations described above in connection with the SVDC, SVLDT and SVTS instructions. In block 98, the SMI service routine ends with a RSM instruction. Upon receiving the RSM instruction, the values automatically saved responsive to the SMI input, namely, the EIP, CR0 register, EFLAGS register, DR7, CS, CS descriptor cache values current instruction REP prefix indicator (P), read/write string instruction indicator (J) and ESI or EDI register, are restored and normal execution is resumed in block 100.

An important feature of the microprocessor 12 is the ability to programmably select the base address for the SMM and the SMM block size. The microprocessor 12 provides a plurality of configuration registers to store configuration data for the microprocessor 12. With respect to the system management functions, the configuration registers provide: (1) system management memory base address and SMM block size selections used to define the system management memory address space, (2) a system management memory access bit used to allow access to SMM without executing SMI, typically for initialization and test purposes, (3) a SMI enable bit used to enable the SMI and SMADS pins, and (4) a main memory access bit used to enable transfer of data to and from main memory that uses the same addresses as SMM while an SMI service routine is active or when the SMM address space is enabled via the SMACC control bit.

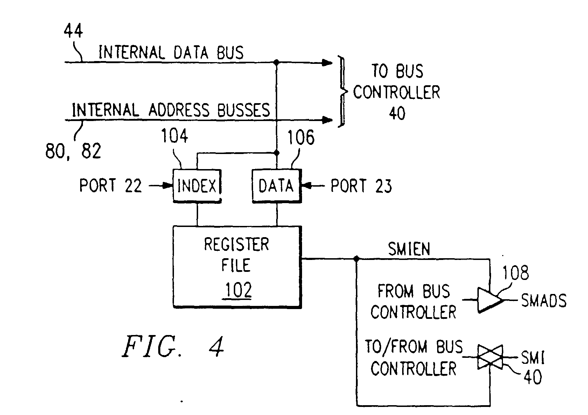

Table 1 describes the configuration data stored in registers relevant to the control of SMI operations. The register index refers to the address of the register in a register file, described below in connection with FIGURE 4.

| **NAME** | **INDEX** | **BIT(S)** | **DESCRIPTION** |
|---|---|---|---|
| Configuration Control Register 1 | C1h | 7 | SM4: If=0, Address Region 4 defines a non-cacheable region. If=1, Address Region 4 defines the system management memory address region. Reset state = 0. |
| (CCR1) | | 6-4 | WP3/WP2/WP1: If=0, Respective Address Regions 3, 2, and 1 define non-cacheable regions. If=1, those regions are cacheable but write protected. Reset state = 0. |
| | | 3 | MMACC: If=1, all data accesses that occur within the SMI service routine or while the SMACC bit is set, will access main memory rather than SM memory. Reset state = 0. |
| | | 2 | SMACC: If=1, SMM memory is enabled, and any access to addresses within the defines system management memory area cause external bus cycles to be issued with the SMADS# output active. Reset state = 0. |
| | | 1 | SMIEN: If=1, enables SMI# and SMADS# pins. If not enabled, SMI# input will not be recognized and SMADS# output will float. Reset state = 0. |
| | | 0 | RPL: If=1, Enables output pins RPLSET and RPLVAL#. Reset state = 0. |

| **REGISTER NAME** | **REGISTER INDEX** | **BIT(S)** | **DESCRIPTION** |
|---|---|---|---|
| Address Region 4 | CDh | 7-0 | Address bits A31-A24 of Region 4 starting address. Reset state = 00h. |
| | CEh | 7-0 | Address bits A23-A16 of Region 4 starting address. Reset state = 00h. |
| | CFh | 7-4 | Address bits A15-A12 of Region 4 starting address. Reset state = 0h. |
| | | 3-0 | Region 4 Block Size: |
| | | | 0000 = Disabled 1000 = 512 Kbytes |
| | | | |
| | | | 0001 = 4 Kbytes 1001 = 1 Mbyte |
| | | | 0010 = 8 Kbytes 1010 = 2 Mbytes |
| | | | 0011 = 16 Kbytes 1011 = 4 Mbytes |
| | | | 0100 = 32 Kbytes 1100 = 8 Mbytes |
| | | | |
| | | | 0101 = 64 Kbytes 1101 = 16 Mbytes |
| | | | 0110 = 128 Kbytes 1110 = 32 Mbytes |
| | | | 0111 = 256 Kbytes 1111 = reserved |
| | | | Reset state = 0h |

Bit 7 of configuration control register 1 specifies whether "adress region 4" defines the system management memory address region. If this bit is set to 1, address region 4 defines the SMM address region. The boundaries of the address space of address region 4 are further defined in connection with the address region 4 registers having indices CDH-CFH. Register CDH specifies address bits A31-A24 of region 4, register CEH specifies address bits A23-A16 of the region 4 starting address, and bits 7-4 of register CFH specifies address bits A15-A12 of the starting address of address region 4. Bits 3-0 of register index CFH specify the block size as specified in Table 1.

For example, if the system designer wishes to define a 128 Kbyte SMM starting at address 100000H, then register CDH would store the binary value "00000000", register CEH would store the value "00010000", and register CFH would store the value "0000" in bits 7-4 and store the value "0110" in bits 3-0. Bit 7 of register C1H would be set to "1"

This aspect of the present embodiment allows the system designer the flexibility to configure the SMM to a desired starting location and block size as needed.

Configuration control register 1 (C1H) comprises three additional bits which affect operation of SMI service routines. Bit 3 of the configuration control register 1 is the MMACC (main memory access) bit. While the MMACC bit is set to "1", all data accesses that occur within a SMI service routine, or while the SMACC bit is set, will access main memory rather than SMM (code fetches will continue to access SMM). The SMACC (system memory access) bit (bit 2 of configuration control register 1) enables the SMM address space if the bit is set to "1". While enabled, any access (data or code fetch) to addresses within the defined SMM address space cause external bus cycles to be issued with the SMADS output active. Bit 1 of configuration control register 1 is the SMIEN (SMI enable) bit. If the SMIEN bit is set to "1", the SMI and SMADS pins are enabled. If SMIEN is set to "0", the SMI and SMADS pins are disconnected from the processor circuitry, i.e., the SMI input will not be recognized and the SMADS output will float. This aspect of the invention is described in greater detail below.

FIGURE 4 illustrates the register file for storing the configuration data described in Table 1, along with the circuitry for reading and writing to the register file. The register file 102 is coupled to an index register 104 and a data register 106. The index and data registers are also coupled to internal data bus 44. The internal data bus 44 is also coupled to the bus controller 40, along with the internal address buses 80 and 82. An output from the register file 102, namely, the SMIEN signal, is coupled to the control inputs of tri-state devices 108 and 110. Tri-state device 108 is coupled between the bus controller and the SMADS pin. Bidirectional tri-state device 110 is coupled between the bus controller and the SMI pin.

In operation, the SMIEN signal corresponds to the value of the SMIEN bit, i.e., bit 1 of register C1 of register file 102. If the SMIEN bit is equal to "1", then the tri-state devices 108-110 will be enabled; if not, the SMI and SMADS pins will be disabled. Since most processor pin-outs, including the 80386 DX and 80386 SX pin-outs, do not use all available pins on the chip package, the SMI and SMADS pins may be provided on the microprocessor chip without changing the pin-out of the chip package to maintain compatibility with the preexisting technology. However, in the preferred embodiment, these pins may be disabled by the SMIEN bit to ensure compatibility with a preexisting system design. In the preferred embodiment, the SMI and SMADS pins are initially disabled upon start-up of the microprocessor, and the BIOS 16 must be configured to enable the pins in its start-up routine, if desired.

Access to the register in register file 102 is achieved by writing the address (referred to as the index) of the register to I/O port 22H. I/O port 23H is used to read data from, or write data to, the register. Each I/O port 23H operation must be preceded by an I/O port 22H operation, otherwise the second and later I/O port 23 operation will be directed off-chip.

For example, to write the value "00000110" to register CFH, the hexadecimal value "CF" would be written to I/O port 22H. This operation would be followed by writing the binary value "00000110 to I/O port 23H.

The present embodiment provides significant advantages over prior art system management techniques. Because the starting address and block size of the SMM can be programmably configured, an optimal SMM address space may be defined which does not waste memory resources and which may be placed in the address space of the microprocessor such that it does not interfere with other system functions or application programs.

Further, upon initiation of an SMI service routine request, the present invention automatically stores only the processor state information which will always be affected pursuant to initiation of a SMI service routine. Other processor state information, which may not be affected during the SMI service routine is selectively saved by the programmer using the enhanced instructions. Thus, information that will not be affected during an SMI service routine need not be stored, thereby reducing the time overhead in performing an SMI service routine.

To provide additional SMI functionality not provided by prior art system management techniques, in accordance with other aspects of the invention, the microprocessor 12 (Figure 1) may implement additional optional features to provide: NMI ENABLE, SMI LOCK, I/O Trap Buffer, and SMINT.

To provide additional control features that enhance SMI capabilities, the microprocessor 12 includes an additional configuration control register CCR3. CCR3 can be used to programmably select (a) NMI ENABLE, and (b) SMI LOCK. The bit assignments for CCR 3 are:

| **Bits** | **CACHE CONFIGURATION REGISTER CCR3: Description** |
|---|---|
| 7:2 | Reserved |
| 1 | NMI_ENABLE: If = 1, then NMI will be acknowledged and serviced during system management mode operation. If = 0, NMI will be masked while in SMM. Power on reset state = 0. |
| 0 | SMI_LOCK: If = 1, then all SMM control bits will be locked. It will not be possible to change the value of bits 1:3, 7 in configuration register CCR1, or the value of registers CCR13, CCR14, and CCR15, or bits 0 and 1 of configuration register CCR3. The lock is disabled when the device is executing an SMI interrupt routine therefore allowing only the SMI handler to modify SMM control information. The lock becomes re-enabled any time the RSM instruction is executed. The lock will remain set until the device is powered off and once set the lock cannot be reset. Power on reset state = 0. |

NMI ENABLE. The programmable NMI enable feature allows NMI events to be serviced in SMM (i.e., while an SMM routine is active). Specifically, NMI can be enabled through the use of an NMI_ENABLE bit -- in the exemplary embodiment, bit 1 in a configuration control register CCR3. This bit will only affect NMI while an SMM routine is active -- otherwise the state of this control bit will have no affect on processing of NMI events. At power on reset the value of the NMI_ENABLE bit is set to 0 (disabled).

If NMI_ENABLE is set prior to entering SMM, then an NMI event will be processed immediately independent of any SMM activity. If NMI_ENABLE is not set, as the microprocessor begins to execute microcode for an SMM routine, NMIs will be disabled from being serviced -- the exemplary microprocessor is capable of storing one NMI event while executing a SMI routine, but this event will not be serviced until a RSM instruction is executed or the NMI_ENABLE control bit is set.

SMI LOCK. The programmable SMI LOCK feature allows the programmer to lock accesses to SMM control information. If the SMI_LOCK bit in CCR3 is set, SMM control information will be locked from any future modification by non-SMM operations.

Specifically, SMI_LOCK will prevent changes to the following SMM configuration control values: (a) CCR1 bits 1:3, 7, i.e., SMI enable (SMIEN), SMM memory access (SMACC), main memory access (MMACC), and the SMM address region (SM4); (b) the registers that define the SMM address space; and (c) CCR3 bit 1, i.e., SMI_LOCK. Thus, with SMI_LOCK set, a non-SMM activity cannot access SMM space, nor modify the SMI_LOCK bit.

Once set, SMI_LOCK remains active until the microprocessor is powered down, so that the lock once set will not be resettable by write accesses to CCR3. Once set, SMI_LOCK will be disabled during execution of an SMM handler, and then re-enabled upon completion of a RSM instruction.

I/O Trap Buffer. To facilitate transparent power-up of a powered-down device in response to a trapped I/O operation to that device, the microprocessor automatically saves to SMM space selected information about the most recent I/O operation. Specifically, in response to an SMI interrupt, the microprocessor will automatically save, as part of the CPU state information, the data (operand), size, and port address. Data size is encoded as: opsize = 01H indicates byte size data, opsize = 03H indicates word size data, and opsize = OFH indicates dword size data.

To support this feature, for each I/O operation, the microprocessor buffers this I/O information in a temporary register. Thus, when an I/O operation results in the computer system returning an SMI interrupt, the microprocessor traps to an SMM routine for powering-up the peripheral. As part of the state information that is automatically saved to SMM space, the SMM routine will also save the I/O information -- data concatenated with port address and data size -- held in the temporary register.

The programmer is then able to interrogate this I/O information prior to the execution of a RSM instruction -- for the exemplary embodiment, the saved I/O information is not part of the state information that is restored in response to RSM. This feature makes it easier to transparently implement SMM power management operations.

The I/O information saved as state information is valid only for I/O write accesses (i.e., for read accesses, the read data would not be known). However, the I/O trap buffer feature can be used to facilitate SMM power management operations in general by, for example, invoking an SMM handler for all I/O operations (whether the peripheral is powered down or not), and then collecting the saved I/O state information to be used to facilitate powering-up a device after power management power-down.

A map of state information saved to top of SMM memory in response to SMI interrupt, including I/O state information, is:

| | |
|---|---|
| DR7 | -4h |
| EFLAGS | -8h |
| CR0 | -Ch |
| CORE IP (Current IP) | -10h |
| ROM IP (Next IP) | -14h |
| Reserved (31:16)::CS Selector | -18h |
| CS Descriptor (63:32) | -1Ch |
| CS Descriptor (31:0) | -20h |
| Reserved (31:4)::S::P::I::C | -24h |
| OP Size::Port Address | -28h |
| Port Data | -2Ch |
| ESI or EDI | -30h |

SMINT. To provide added flexibility in the use of SMM, the present invention implements a software SMI instruction SMINT that can be used to invoke SMM. This instruction is mapped into a two byte opcode map, with the encoding 0F7E.

SMINT can only be executed with current privilege level (CPL) = 0 (highest privilege), and provided SMIEN is enabled, and SMACC is set. Note that the normal criterion to enable SMI includes having the SM4 bit (bit 7 of CCR1) set to designate address region 4 as SMI space, and to have this SMM region size greater than 0.

The SMINT instruction invokes SMM is a manner equivalent to an SMI interrupt: the microprocessor automatically saves off the state of the chip to the top of SMM memory space, and starts prefetching from the bottom of SMM space. Upon execution of RSM instruction the chip will return and continue operation from the point where software SMI instruction was executed.

When an SMM event is initiated using SMINT, a status bit in the SMM memory map is set to indicate that the current SMM handler is being executed in response to software initiated interrupt. Specifically, the PIC field in the SMM memory map shown in FIGURE 3c is expanded to an SPIC field (see the above memory map), where the S bit is used to identify if the SMM event was initiated by software or hardware.

During a software initiated SMM event, the receipt of an external hardware SMI interrupt is latched, triggering a hardware initiated SMM operation after the software initiated SMM routine executes RSM. In accordance with normal SMI operation, the SMI handshake will be honored and the SMI pin will be driven low until the hardware initiated SMI handler is complete and has executed a RSM instruction.

The following table summarizes the SMM instructions according to the invention, including SMINT. Note that to execute any of these opcodes SMI must be enabled, and either (a) the microprocessor is executing an SMI interrupt routine, or (b) SMACC is set (which can be used to initialize SMM memory space.

| **Instruction** | **Opcode** | **Format** | **Description** |
|---|---|---|---|
| SVDC | 0F78 | SVDC mem80, reg | Saves 'reg' contents and associated descriptor cache to 'mem80'. 'mem80' is an 80-bit memory location and 'reg' = DS, ES, FS, GS, SS or CS. |
| RSDC | 0F79 | RSDC reg. mem80 | Restores 'reg' contents and associated descriptor cache from 'mem80'. 'mem80' is an 80-bit memory location and 'reg' = DS, ES, FS, GS, or SS. Note CS is not allowed with RSDC but is allowed with SVDC. |
| SVLDT | 0F7A | SVLDT mem80 | Saves LDTR, Local Descriptor Table Register, to 'mem80', an 80-bit memory location. |
| RSLDT | 0F7B | RSLDT mem80 | Restores LDTR, Local Descriptor Table Register, from 'mem80', an 80-bit memory location. |
| SVTS | 0F7C | SVTS mem80 | Saves TSR, Task State Register, to 'mem80', an 80-bit memory location. |
| RSTS | 0F7D | RSTS mem80 | Restores TSR, Task State Register, from 'mem80', an 80-bit memory location. |
| RSM | 0FAA | RSM | Exits SMI service routine,. CPU state is restored from top of SMM space and execution resumes at interrupted point. |
| SMINT | 0F7E | SMINT | Calls SMI service routine. CPU state is saved to top of SMM space and execution will start from base of SMM space. |

Although an example of the present invention and its advantages have been described in detail, it should be understood that various changes, substitutions and alternations can be made thereto without departing from the scope of the invention.

## Claims

1. A microprocessor (12), intended in use to be coupled to a memory (15), wherein the microprocessor has circuitry (102) for programmably defining a desired range of addresses within the address space of the memory for storing system management routines; circuitry (78) responsive to a system management interrupt to access said defined address range for selectively invoking said routines in performing a system management mode operation; and circuitry for selectively programmable storage of processor status information in said defined range of addresses responsive to said system management interrupt.

2. A microprocessor according to claim 1, wherein said desired range of addresses is programmable as to base address and block size.

3. A microprocessor according to claim 1 or claim 2, wherein said circuitry for programmably storing processor status information responsive to said system management interrupt automatically stores processor status information that would be affected by system management mode operations.

4. A microprocessor according to any of claims 1 to 3, wherein said processor status information is associated with selected registers.

5. A microprocessor according to claim 4, wherein said selected processor status information includes I/O information from a temporary register.

6. A microprocessor according to claim 5, wherein the I/O information comprises the associated operand, operand size, and port address for an I/O operation.

7. A microprocessor according to any of claims 1 to 6, including circuitry responsive to a system management interrupt to return the microprocessor to normal mode operation following completion of a said system management mode operation.

8. A microprocessor according to any of claims 1 to 7, and further including circuitry (CCR3) for selectively enabling recognition of NMIs during system management mode operations, such that, with an NMI enabled, the corresponding NMI handler routine can be executed, but with NMI not enabled, the NMI interrupt can only be serviced after a return to normal mode operation.

9. A microprocessor according to any of claims 1 to 8, and further including circuitry (CCR3) responsive to an enabled system management mode lock state to prevent any activity other than a system management mode routine from modifying system management mode configuration information.

10. A microprocessor according to claim 9, wherein once system management mode lock is enabled, it remains enabled until power-down of the microprocessor unless system management lock is disabled by a system management mode routine.

11. A microprocessor according to any of claims 1 to 10, wherein the microprocessor accesses said defined range of addresses in response to (i) a system management interrupt signal generated external to the microprocessor (SMI) or (ii) a system management interrupt provided by software (SMINT) being executed by the microprocessor during normal mode operations.

12. A computer system including a microprocessor (12) according to any of claims 1 to 11, coupled to memory external of the microprocessor (15) and to at least one peripheral device, said microprocessor including a clock source (84) for controlling operations of the microprocessor, said clock source frequency controlled by clock signals (CLK2) generated externally of the microprocessor.

13. A computer according to claim 12, wherein during a system management mode operation initiated because of the powered down state of the peripheral device to which the microprocessor operating in normal mode was attempting to write data, and said stored processor status data includes I/O information associated with said write, said associated I/O information is interrogated and then used to retry the I/O operation during normal mode operations after the peripheral is powered up.

14. A method of implementing system management mode operation of a microprocessor (12) coupled to memory (15), comprising programmably defining a desired range of addresses within the address space (Address Region 4) of the memory and storing system management routines in that defined address range, and in response to a system management interrupt (SMI; SMINT); accessing said defined address range (86, 88) to selectively invoke a system management routine in performing a system management mode operation (90); and effecting selectively programmable storage of processor status information in said defined address range in response to said system management interrupt (92).

15. A method according to claim 14, in which the microprocessor is returned to normal mode operation following completion of a said system management mode operation (98,100)

16. A method according to claim 14 or 15, wherein said desired range of addresses is programmable as to base address and block size.

17. A method according to any of claims 14 to 16, wherein in response to said system management interrupt, processor status information that would be affected by system management mode operations is automatically stored.

18. A method according to claim 17, wherein said processor status information that is automatically stored includes I/O information from a temporary register.

19. A method according to claim 18, wherein the I/O information comprises the associated operand, operand size, and port address for the I/O operation.

20. A method according to any of claims 14 to 19, wherein NMIs are selectively recognized during system management mode operations, such that, with an NMI enabled, the corresponding NMI handler routine can be executed, but with NMI not enabled, the NMI interrupt can only be serviced after a return to normal mode operation.

21. A method according to any of claims 14 to 20, wherein in response to an enabled system management mode lock state, any activity other than a system management mode routine is prevented from modifying system management mode configuration information.

22. A method according to claim 21, wherein once system management mode lock is enabled , it remains enabled until power-down of the microprocessor unless system management lock is disabled by a system management mode routine.

23. A method according to any of claims 14 to 22, wherein the microprocessor is responsive to both (i) a system management interrupt signal generated external to the microprocessor (SMI) and (ii) a system management interrupt provided by software (SMINT) being executed by the microprocessor during normal mode operations.

## Patentansprüche

1. Ein Mikroprozessor (12), dafür bestimmt, an einen Speicher (15) gekoppelt verwendet zu werden, worin der Mikroprozessor eine Schaltungsanordnung (102) zum programmierbar Definieren eines erwünschten Bereiches von Adressen innerhalb des Adressraumes des Speichers zum Speichern von Systemverwaltungsroutinen; eine Schaltungsanordnung (78), die auf einen Systemverwaltungsinterrupt reagiert, um auf den definierten Adressbereich zum selektiv Aufrufen der Routinen beim Ausführen einer Systemverwaltungsmodusoperation zuzugreifen; und eine Schaltungsanordnung zur selektiv programmierbaren Speicherung von Prozessorstatusinformation in dem definierten Bereich von Adressen, die auf den Systemverwaltungsinterrupt reagiert, besitzt.

2. Ein Mikroprozessor nach Anspruch 1, worin der erwünschte Bereich von Adressen bezüglich der Basis-adresse und der Blockgröße programmierbar ist.

3. Ein Mikroprozessor nach Anspruch 1 oder Anspruch 2, worin die Schaltungsanordnung zum programmierbar Speichern von Prozessorstatusinformation, die auf den Systemverwaltungsinterrupt reagiert, automatisch Prozessorstatusinformation speichert, die von Systemverwaltungsmodusoperationen beeinflußt würde.

4. Ein Mikroprozessor nach einem der Ansprüche 1 bis 3, worin die Prozessorstatusinformation mit ausgewählten Registern assoziiert ist.

5. Ein Mikroprozessor nach Anspruch 4, worin die ausgewählte Prozessorstatusinformation E/A-Information aus einem Zwischenregister umfasst.

6. Ein Mikroprozessor nach Anspruch 5, worin die E/A-Information den assoziierten Operanden, die Operandengröße und die Portadresse für eine E/A-Operation umfasst.

7. Ein Mikroprozessor nach einem der Ansprüche 1 bis 6, der eine Schaltungsanordnung umfasst, die auf einen Systemverwaltungsinterrupt reagiert, um den Mikroprozessor zur Normalmodusoperation zurückzubringen, die auf die Beendigung einer besagten Systemverwaltungsmodusoperation folgt.

8. Ein Mikroprozessor nach einem der Ansprüche 1 bis 7, der des weiteren eine Schaltungsanordnung (CCR3) zum selektiv Auslösen der Erkennung von NMIs während Systemverwaltungsmodusoperationen umfasst, derart, daß, wenn ein NMI freigegeben ist, die entsprechende NMI-Steuerungsroutine ausgeführt werden kann, aber wenn der NMI nicht freigegeben ist, der NMI-Interrupt nur nach einer Rückkehr zur Normalmodusoperation abgefertigt werden kann.

9. Ein Mikroprozessor nach einem der Ansprüche 1 bis 8, der des weiteren eine Schaltungsanordnung (CCR3) umfasst, die auf einen aktivierten Systemverwaltungsmodusverriegelungszustand reagiert, um jede Aktivität außer einer Systemverwaltungsmodusroutine daran zu hindern, Systemverwaltungsmoduskonfigurationsinformation zu modifizieren.

10. Ein Mikroprozessor nach Anspruch 9, worin, sobald die Systemverwaltungsmodusverriegelung aktiviert ist, sie bis zum Abschalten des Mikroprozessors aktiviert bleibt, außer wenn die Systemverwaltungsverriegelung durch eine Systemverwaltungsmodusroutine deaktiviert wird.

11. Ein Mikroprozessor nach einem der Ansprüche 1 bis 10, worin der Mikroprozessor auf den definierten Bereich von Adressen als Reaktion auf (i) ein außerhalb des Mikroprozessors generiertes Systemverwaltungsinterruptsignal (SMI) oder (ii) einen mittels Software, die von dem Mikroprozessor während Normalmodusoperationen ausgeführt wird, bereitgestellten Systemverwaltungsinterrupt (SMINT) zugreift.

12. Ein Computersystem, das einen Mikroprozessor (12) gemäß einem der Ansprüche 1 bis 11 umfasst, der an einen Speicher ausserhalb des Mikroprozessors (15) und wenigstens ein Peripheriegerät gekoppelt ist, wobei der Mikroprozessor eine Taktquelle (84) zum Steuern der Operationen des Mikroprozessors umfasst, wobei die Taktquellenfrequenz durch außerhalb des Mikroprozessors generierte Taktsignale (CLK2) geregelt wird.

13. Ein Computer nach Anspruch 12, worin während einer Systemverwaltungsmodusoperation, initiiert infolge des abgeschalteten Zustands des Peripheriegerätes, in das der im Normalmodus operierende Mikroprozessor versuchte Daten zu schreiben, und wobei die gespeicherten Prozessorstatusdaten mit dem Schreibzugriff assoziierte E/A-Information umfassen, die assoziierte E/A-Information abgefragt und dann verwendet wird, um die E/A-Operation während Normalmodusoperationen zu wiederholen nachdem die Peripherie eingeschaltet ist.

14. Ein Verfahren zum Implementieren einer Systemverwaltungsmodusoperation eines an einen Speicher (15) gekoppelten Mikroprozessors (12), das umfasst:
programmierbar Definieren eines erwünschten Bereiches von Adressen innerhalb des Adressraumes (Adressbereich 4) des Speichers und Speichern von Systemverwaltungsroutinen in jenem definierten Adressbereich, und als Reaktion auf einen Systemverwaltungsinterrupt (SMI; SMINT); Zugreifen auf den definierten Adressbereich (86, 88), um selektiv eine Systemverwaltungsroutine beim Ausführen einer Systemverwaltungsmodusoperation aufzurufen (90); und Bewirken einer selektiv programmierbaren Speicherung von Prozessorstatusinformation in dem definierten Adressbereich als Reaktion auf den Systemverwaltungsinterrupt (92).

15. Ein Verfahren nach Anspruch 14, in dem der Mikroprozessor zur Normalmodusoperation zurückgebracht wird, die auf die Beendigung einer besagten Systemverwaltungsmodusoperation folgt (98, 100).

16. Ein Verfahren nach Anspruch 14 oder 15, worin der erwünschte Bereich von Adressen bezüglich der Basis-adresse und der Blockgröße programmierbar ist.

17. Ein Verfahren nach einem der Ansprüche 14 bis 16, worin als Reaktion auf den Systemverwaltungsinterrupt automatisch Prozessorstatusinformation gespeichert wird, die von Systemverwaltungsmodusoperationen beeinflußt würde.

18. Ein Verfahren nach Anspruch 17, worin die Prozessorstatusinformation, die automatisch gespeichert wird, E/A-Information aus einem Zwischenregister umfasst.

19. Ein Verfahren nach Anspruch 18, worin die E/A-Information den assoziierten Operanden, die Operandengröße und die Portadresse für die E/A-Operation umfasst.

20. Ein Verfahren nach einem der Ansprüche 14 bis 19, worin NMIs während Systemverwaltungsmodusoperationen selektiv erkannt werden, derart, daß, wenn ein NMI freigegeben ist, die entsprechende NMI-Steuerungsroutine ausgeführt werden kann, aber wenn der NMI nicht freigegeben ist, der NMI-Interrupt nur nach einer Rückkehr zur Normalmodusoperation abgefertigt werden kann.

21. Ein Verfahren nach einem der Ansprüche 14 bis 20, worin als Reaktion auf einen aktivierten Systemverwaltungsmodusverriegelungszustand jede Aktivität außer einer Systemverwaltungsmodusroutine daran gehindert wird, Systemverwaltungsmoduskonfigurationsinformation zu modifizieren.

22. Ein Verfahren nach Anspruch 21, worin, sobald die Systemverwaltungsmodusverriegelung aktiviert ist, sie bis zum Abschalten des Mikroprozessors aktiviert bleibt, außer wenn die Systemverwaltungsverriegelung durch eine Systemverwaltungsmodusroutine deaktiviert wird.

23. Ein Verfahren nach einem der Ansprüche 14 bis 22, worin der Mikroprozessor sowohl auf (i) ein ausserhalb des Mikroprozessors generiertes Systemverwaltungsinterruptsignal (SMI) als auch (ii) einen mittels Software, die von den Mikroprozessor während Normalmodusoperationen ausgeführt wird, bereitgestellten Systemverwaltungsinterrupt (SMINT) reagiert.

## Revendications

1. Microprocesseur (12), destiné à une utilisation en association avec une mémoire (15), dans lequel le microprocesseur comporte des circuits (102) destinés à définir, par programme, une gamme d'adresses souhaitée à l'intérieur de l'espace d'adressage de la mémoire pour mémoriser des programmes de gestion de système ; des circuits (78) sensibles à une interruption de gestion de système pour accéder à ladite gamme d'adresses définie pour amener sélectivement lesdits programmes à effectuer une opération en mode gestion de système ; et des circuits destinés à une mémorisation sélective programmable d'information d'état de processeur dans ladite gamme d'adresses définie, sensibles à ladite interruption de gestion de système.

2. Microprocesseur selon la revendication 1, dans lequel ladite gamme d'adresses souhaitée est programmable en tant qu'adresse de base et longueur de bloc.

3. Microprocesseur selon la revendication 1 ou la revendication 2, dans lequel lesdits circuits destinés à mémoriser de façon programmable de l'information d'état de processeur, sensibles à ladite interruption de gestion de système, mémorisent automatiquement de l'information d'état de processeur qui serait affectée par des opérations en mode gestion de système.

4. Microprocesseur selon l'une quelconque des revendications 1 à 3, dans lequel ladite information d'état de processeur est associée à des registres choisis.

5. Microprocesseur selon la revendication 4, dans lequel ladite information d'état de processeur choisie comprend de l'information d'I/O (entrée/sortie) provenant d'un registre temporaire.

6. Microprocesseur selon la revendication 5, dans lequel l'information d'I/O comprend l'opérande associée, la grandeur d'opérande et une adresse d'accès d'une opération d'I/O.

7. Microprocesseur selon l'une quelconque des revendications 1 à 6, comprenant des circuits sensibles à une interruption de gestion de système pour ramener le microprocesseur en mode de fonctionnement normal à la suite d'une dite opération en mode gestion de système.

8. Microprocesseur selon l'une quelconque des revendications 1 à 7, et comprenant en outre des circuits (CCR3) destinés à valider sélectivement une reconnaissance de NMI (interruption non masquable) au cours d'opérations en mode gestion de système, telle que, une NMI étant validée, le programme de prise en charge de NMI correspondant peut être exécuté, mais une NMI n'étant pas validée, l'interruption de NMI ne peut être traitée qu'après un retour en mode de fonctionnement normal.

9. Microprocesseur selon l'une quelconque des revendications 1 à 8, et comprenant en outre des circuits (CCR3) sensibles à un état de verrouillage en mode gestion de système validé pour empêcher que toute activité autre qu'un programme de mode gestion de système ne modifie de l'information de configuration de mode gestion de système.

10. Microprocesseur selon la revendication 9, dans lequel dès que le verrou de mode gestion de système est validé, il reste validé jusqu'à une mise hors-circuit du microprocesseur sauf si le verrou de gestion de système est invalidé par un programme de mode gestion de système.

11. Microprocesseur selon l'une quelconque des revendications 1 à 10, dans lequel le microprocesseur a accès à ladite gamme d'adresses définie en réponse à (i) un signal d'interruption de gestion de système généré de façon externe au microprocesseur (SMI), ou à (ii) une interruption de gestion de système délivrée par logiciel (SMINT) exécutée par le microprocesseur au cours d'opérations en mode normal.

12. Système informatique comprenant un microprocesseur (12) selon l'une quelconque des revendications 1 à 11, associé à une mémoire externe du microprocesseur (15) et à au moins un dispositif périphérique, ledit microprocesseur comprenant une source de signal d'horloge (84) destinée à commander des opérations du microprocesseur, ladite fréquence de source de signal d'horloge étant commandée par des signaux d'horloge (CLK2) générés de façon externe au microprocesseur.

13. Système selon la revendication 12, dans lequel, au cours d'une opération en mode gestion de système commencée en raison de l'état hors-circuit du dispositif périphérique dans lequel le microprocesseur opérant en mode normal tente d'écrire des données, et dans lequel lesdites données mémorisées d'état de processeur comprennent de l'information d'I/O associée à ladite écriture, ladite information d'I/O associée étant interrogée et ensuite utilisée pour tenter de relancer l'opération d'I/O au cours d'opérations en mode normal après mise sous tension du périphérique.

14. Procédé de réalisation d'une opération en mode gestion de système d'un microprocesseur (12) en association avec une mémoire (15), comprenant la définition de façon programmable d'une gamme d'adresses souhaitée à l'intérieur de l'espace d'adressage (région d'adresses 4) de la mémoire et la mémorisation de programmes de gestion de système dans cette gamme d'adresses définie, et, en réponse à une interruption de gestion de système (SMI ; SMINT) ; l'accès à ladite gamme d'adresses (86, 88) définie pour amener sélectivement un programme de gestion de système à effectuer une opération (90) en mode gestion de système ; et la réalisation sélective programmable d'une mémorisation d'information d'état de processeur dans ladite gamme d'adresses définie en réponse à ladite interruption de gestion de système (92).

15. Procédé selon la revendication 14, dans lequel le microprocesseur est ramené en mode de fonctionnement normal à la suite de ladite opération en mode gestion de système (98, 100).

16. Procédé selon la revendication 14 ou 15, dans lequel ladite gamme d'adresses souhaitée est programmable en tant qu'adresse de base et longueur de bloc.

17. Procédé selon l'une quelconque des revendications 14 à 16, dans lequel en réponse à ladite interruption de gestion de système, l'information d'état de processeur qui serait affectée par des opérations en mode gestion de système est mémorisée automatiquement.

18. Procédé selon la revendication 17, dans lequel ladite information d'état de processeur qui est mémorisée automatiquement comprend de l'information d'I/O provenant d'un registre temporaire.

19. Procédé selon la revendication 18, dans lequel l'information d'I/O comprend l'opérande associée, la grandeur d'opérande et une adresse d'accès pour l'opération d'I/O.

20. Procédé selon l'une quelconque des revendications 14 à 19, dans lequel des NMI sont reconnues sélectivement au cours d'opérations en mode gestion de système, de façon telle que, une NMI étant validée, le programme de prise en charge de NMI correspondant puisse être exécuté, mais une NMI n'étant pas validée, l'interruption de NMI ne peut être traitée qu'après un retour en mode de fonctionnement normal.

21. Procédé selon l'une quelconque des revendications 14 à 20, dans lequel, en réponse à un état de verrouillage validé en mode gestion de système, toute activité autre qu'un programme de mode gestion de système ne peut pas modifier de l'information de configuration de mode gestion de système.

22. Procédé selon la revendication 21, dans lequel, dès que le verrou de mode gestion de système est validé, il reste validé jusqu'à une mise hors-circuit du microprocesseur sauf si le verrou de gestion de système est invalidé par un programme de mode gestion de système.

23. Procédé selon l'une quelconque des revendications 14 à 22, dans lequel le microprocesseur est sensible à la fois (i) à un signal d'interruption de gestion de système généré de façon externe au microprocesseur (SMI) et (ii) à une interruption de gestion de système délivrée par logiciel (SMINT) exécutée par le microprocesseur au cours d'opérations en mode normal.
